# EUROPEAN PATENT APPLICATION

(11) **EP 4 322 374 A1**
(43) Date of publication of application: **14.02.2024**
(21) Application number: 22190255.4
(22) Date of filing: 12.08.2022
(51) Int. Cl.: H02J 50/20, H02J 50/80, H02J 50/00

(54) **METHOD FOR POWER TRANSMITTING WITHIN A MOBILE COMMUNICATION NETWORK**

(71) Applicant: Deutsche Telekom AG, 53113 Bonn (DE)
(72) Inventor: KLATT, Axel, 50999 Köln (DE)
(74) Representative: Schwöbel, Thilo K.

(57) **Abstract**

The invention relates to a method for transmitting an amount of energy, within a mobile communication network, by means of a radiofrequency energy-transmitting signal in order to provide energy to be used by a machine type communication device,
wherein the mobile communication network comprises or is associated to an access network, the access network comprising at least one base station entity,
wherein at least one user equipment is connected or able to be connected to the mobile communication network,
wherein the base station entity and/or the user equipment is provided to act as an energy-transmitting entity, wherein the energy-transmitting entity transmits the radiofrequency energy-transmitting signal,
wherein, in order for the machine type communication device to receive the amount of energy by means of or using the radiofrequency energy-transmitting signal, the method comprises the following steps:
-- in a first step, the energy-transmitting entity transmits an announcement signal,
wherein the announcement signal is received by the machine type communication device and wherein the announcement signal indicates that transmission of energy to the machine type communication device is available,
-- in a second step, the energy-transmitting entity transmits the radiofrequency energy-transmitting signal, wherein the amount of energy is thereby received by the machine type communication device.

## Description

### BACKGROUND

The present invention relates a method for transmitting an amount of energy, within a mobile communication network, by means of a radiofrequency energy-transmitting signal in order to provide energy to be used by a machine type communication device, wherein the mobile communication network comprises or is associated to an access network, the access network comprising at least one base station entity, wherein at least one user equipment is connected or able to be connected to the mobile communication network, wherein the base station entity and/or the user equipment is provided to act as an energy-transmitting entity, wherein the energy-transmitting entity transmits the radiofrequency energy-transmitting signal.

Furthermore, the present invention relates to a base station entity for transmitting an amount of energy, within a mobile communication network, by means of a radiofrequency energy-transmitting signal in order to provide energy to be used by a machine type communication device, wherein the base station entity is part of the mobile communication network or of its access network, wherein the base station entity is provided to act as an energy-transmitting entity transmitting the radiofrequency energy-transmitting signal.

Furthermore, the present invention relates to a user equipment for transmitting an amount of energy, within a mobile communication network, by means of a radiofrequency energy-transmitting signal in order to provide energy to be used by a machine type communication device, wherein the user equipment is connected or able to be connected to the mobile communication network, wherein the user equipment is provided to act as an energy-transmitting entity transmitting the radiofrequency energy-transmitting signal.

Additionally, the present invention relates to a machine type communication device for receiving an amount of energy, within a mobile communication network, transmitted by means of a radiofrequency energy-transmitting signal in order to provide energy to be used by the machine type communication device,
wherein a base station entity and/or a user equipment of the mobile communication network acts as an energy-transmitting entity, wherein the machine type communication device receives the energy-transmitting signal from the energy-transmitting entity.

Additionally, the present invention relates to a system or a mobile communication network for transmitting an amount of energy, within the mobile communication network, by means of a radiofrequency energy-transmitting signal in order to provide energy to be used by a machine type communication device, wherein the mobile communication network comprises or is associated to an access network, the access network comprising at least one base station entity, wherein at least one user equipment is connected or able to be connected to the mobile communication network, wherein the base station entity and/or the user equipment is provided to act as an energy-transmitting entity, wherein the energy-transmitting entity transmits the radiofrequency energy-transmitting signal.

Furthermore, the present invention relates to a program and to a computer-readable medium for transmitting an amount of energy, within a mobile communication network, by means of a radiofrequency energy-transmitting signal in order to provide energy to be used by a machine type communication device according to the inventive method.

Radiofrequency energy harvesting is today widely known as a technology to allow for battery-less internet-of-things devices or technology, also known as ambient internet-of-things devices or technology, i.e. internet-of-things radio communication.

Radiofrequency (RF) energy harvesting is a form of a wireless power transfer technique where the received radiofrequency signals are converted into electricity as a usable electric power source. It is also known as radiofrequency power scavenging. Radiofrequency energy harvesting devices can provide a powerful solution to wireless devices by enabling them to harvest energy from the radiofrequency signals which are available or present in the environment of the considered device. Radiofrequency energy harvesting is implemented in various applications including, wireless sensor networks, wearable devices, wireless charging, and internet-of-things technology.

The principle is known a long time and simple, but it is only today, with more advanced technologies, that it is becoming more and more popular: A wireless device requires energy for radio transmission and this energy is harvested from surrounding radiofrequency energy instead of from a battery. With such an approach low power radiofrequency transmission is possible for sending a few bytes for internet-of-things communication.
The radiofrequency energy needs to be provided to the energy harvesting device from an external source or from the radiofrequency environment, where cellular or WLAN radio waves surrounding the device provide energy sufficient to power up the device for transmission.

The most prominent and well-known technology today are radiofrequency identification, RFID, tags: This technology is known, e.g. for theft protection in stores, where the energy providing elements are placed at the doors and if a non-deactivated price tag is carried through the barrier the alarm is activated. RFID tags are also widely used in the industry for labeling and handheld terminal readers are used to read out the tags by providing radiofrequency energy.

What is common to all known scenarios for radiofrequency energy harvesting is the principle that the radiofrequency transmission is (directly) triggered by bringing the energy source in the vicinity of the radiofrequency harvesting device or the radiofrequency harvesting is done from surrounding radiofrequency energy sources.

3GPP SA1 is currently performing a study on "Ambient loT" to enable 3GPP based technology for such scenarios. While it might be known that a device, being able to perform radiofrequency energy harvesting is able to request another device to provide radiofrequency energy, it remains challenging to implement communication between such devices in order to actually realize the radiofrequency energy harvesting in an efficient manner.

### SUMMARY

An object of the present invention is to provide a technically simple, effective and cost-effective solution for transmitting an amount of energy, within a mobile communication network, by means of a radiofrequency energy-transmitting signal in order to provide energy to be used by a machine type communication device. A further object of the present invention is to provide a corresponding base station entity, user equipment, machine type communication device, system or mobile communication network, and a corresponding program and computer-readable medium.

The object of the present invention is achieved by a method for transmitting an amount of energy, within a mobile communication network, by means of a radiofrequency energy-transmitting signal in order to provide energy to be used by a machine type communication device, wherein the mobile communication network comprises or is associated to an access network, the access network comprising at least one base station entity, wherein at least one user equipment is connected or able to be connected to the mobile communication network, wherein the base station entity and/or the user equipment is provided to act as an energy-transmitting entity, wherein the energy-transmitting entity transmits the radiofrequency energy-transmitting signal, wherein, in order for the machine type communication device to receive the amount of energy by means of or using the radiofrequency energy-transmitting signal, the method comprises the following steps:
-- in a first step, the energy-transmitting entity transmits an announcement signal, wherein the announcement signal is received by the machine type communication device and wherein the announcement signal indicates that transmission of energy to the machine type communication device is available,
-- in a second step, the energy-transmitting entity transmits the radiofrequency energy-transmitting signal, wherein the amount of energy is thereby received by the machine type communication device.

It is thereby advantageously possible according to the present invention that the transmission of energy from the energy-transmitting entity towards the machine type communication device is able to be rendered more efficient or performed in a more efficient manner as the transmission of the energy-transmitting signal is announced to the machine type communication device by means of the announcement signal.
In contrast to previously known methods for transmitting radiofrequency energy, the announcement signal according to the present invention provides the possibility for machine type communication devices to be able to prepare for the transmission of radiofrequency energy, and, hence, to render such transfer of energy more efficient. Furthermore, the announcement signal allows both for the possibility that no further interaction between the energy-transmitting device and the machine type communication device occurs (prior to the energy-transmitting signal) - i.e. the energy-transmitting signal is transmitted in any case - but it also allows for the possibility that the machine type communication device, prior to the energy-transmitting signal being sent, transmits a request signal by means of which the energy-transmitting signal is able to be triggered and/or even modified. Hence, according to the present invention, it is advantageously possible to realize improved scenarios of radiofrequency energy transmission where the radiofrequency harvesting device is able to request the dedicated provision of radiofrequency energy distribution to power up the radiofrequency harvesting device on request. In other words, the method according to the present invention allows such a radiofrequency harvesting devices (or machine type communication devices) to request a radiofrequency source (or energy-transmitting entity, e.g. a 5G gNB) to provide radiofrequency energy dedicated to the requesting device; by means of the announcement signal, the possible transmission of energy might be promoted, e.g. by means of standardized system information broadcast information (i.e. SIB) indicating that an ambient powered device can request provision of radiofrequency energy from this node (i.e. gNB).

Hence, according to at least variants of the present invention, it is advantageously possible that the request of a radiofrequency harvesting device (i.e. typically a machine type communication device) towards a network node such as, especially, a base station entity or gNB (but such a network node could also be a user equipment in the form of, e.g., a smart phone or other device, i.e. typically not being a machine type communication device or internet-of-things device) is provided after the network node announced radiofrequency energy provision capabilities, e.g. using system information broadcast information; further, the request might be able to define the beam forming and radiofrequency energy pulse forming for the radiofrequency energy provision.

In this sense it is proposed, according to the present invention, that for example a gNB (or in the wider sense any network node, such as a user equipment, which is part of a cellular system, such as LTE or NR or any other) can provide radiofrequency energy provision (i.e. is able to announce for the provision of such (additional) radiofrequency energy) for ambient powered communication devices.

According to the present invention, it is advantageously possible and preferred that the time definition and/or the frequency definition of the energy-transmitting signal is defined or indicated by the announcement signal, and wherein the energy-transmitting signal is transmitted in accordance with the content of the announcement signal, wherein especially the announcement signal comprises an indication that the energy-transmitting signal is transmitted in any case,
wherein especially the energy-transmitting signal is transmitted - as announced and/or defined by the announcement signal - repeatedly, especially at least one once during a predetermined time interval.

It is thereby advantageously possible according to the present invention that the energy transmission, by the energy-transmitting signal is able to be somehow prepared by the announcement signal such that the energy transmission, towards the machine type communication or internet-of-things device, is at least potentially able to be rendered more efficient, hence more beneficial for the whole system, including not only the energy-receiving machine type communication or internet-of-things device but also the energy-transmitting device and the mobile communication network as a whole - due to, for example, that the transmission of measurement values does not need to be repeated due to a lack of power or energy of the considered machine type communication device, and, hence, overall network resources are saved or used more efficiently.

According to the present invention, it is advantageously furthermore possible and preferred that, in a third step subsequent to the first step and prior to the second step, the machine type communication device transmits a request signal towards the energy-transmitting entity, wherein the announcement signal announces only the possibility of the radiofrequency energy-transmitting signal being transmitted, by the energy-transmitting entity, in response to the request signal, wherein especially
-- the time definition and/or the frequency definition and/or the transmission power and/or the waveform of the possible energy-transmitting signal is defined or indicated by the announcement signal and the content of the request signal essentially only triggers the energy-transmitting signal, or
-- the time definition and/or the frequency definition and/or the transmission power and/or the waveform of the energy-transmitting signal is at least partly defined or indicated by the request signal.

By means of not only using the announcement signal (prior to transmitting the energy-transmitting signal) but also the request signal (prior to the transmission of the energy-transmitting signal), it is advantageously possible according to the present invention that the possibility of the transmission of (additional) radiofrequency energy is rendered even more flexible.

According to the present invention, it is furthermore advantageously possible and preferred that - especially in case that the energy-transmitting entity corresponds to the base station entity - the announcement signal is transmitted on a system information broadcast channel, especially the broadcast control channel and especially using system information block signaling,
wherein especially the announcement signal indicates at least one characteristics of the request signal, especially at least one out of the following:
-- a specific random access channel partition,
-- a specific random access channel time slot,
-- a specific random access channel preamble,
-- a higher layer uplink control channel message, especially a radio resource control message.

It is thereby advantageously possible according to the present invention that a base station entity is able to announce the provision of (additional) radiofrequency energy to be potentially provided to machine type communication or internet-of-things devices in the vicinity of the respective base station entity.

Furthermore, it is advantageously possible and preferred according to the present invention that - especially in case that the energy-transmitting entity corresponds to the user equipment - the announcement signal is transmitted on a sidelink broadcast channel, especially the sidelink broadcast control channel,
wherein especially the announcement signal indicates at least one characteristics of the request signal, especially at least one out of the following:
-- a specific random access channel partition,
-- a specific random access channel time slot,
-- a specific random access channel preamble,
-- a higher layer uplink control channel message, especially a radio resource control message.

It is thereby advantageously possible according to the present invention that a user equipment (especially a rather ordinary user equipment of the kind of, e.g., a smart phone or the like, but also a rather specific user equipment, e.g. specifically used or provided for such transmission of radiofrequency energy) is able to announce the provision of (additional) radiofrequency energy to be potentially provided to machine type communication or internet-of-things devices in the vicinity of the respective base station entity.

Furthermore, it is advantageously possible and preferred according to the present invention that the request signal is received by the energy-transmitting entity, especially on a common control channel, and especially as indicated by the announcement signal,
wherein especially the approximate position and/or distance of the machine type communication device, especially relative to the energy-transmitting entity, is derived from the request signal,
wherein especially the energy transmission realized by the energy-transmitting signal is concentrated or focused towards or in the direction of the machine type communication device, wherein the energy-transmitting signal especially is or corresponds to a dedicated radiofrequency pulse beam,
wherein especially the energy transmission realized by the energy-transmitting signal is adapted, especially regarding its transmission power, to the distance of the machine type communication device from the energy-transmitting entity, this distance especially being derived from the request signal, especially its reception power at the energy-transmitting device.

Thereby, it is advantageously possible to comparatively easily and efficiently realize and implement the method according to the present invention. For example, the 5G technology (especially new radio, NR, technology) with its beamforming capabilities is able to be enhanced such that after the request of the radiofrequency harvesting device (i.e. the request signal) a dedicated radiofrequency pulse beam is formed to direct the radiofrequency energy towards the requesting device to provide sufficient energy for the dedicated subsequent communication needs.

According to a further preferred embodiment of the present invention, the request signal comprises at least one characteristics being able to be used to authenticate the machine type communication device to request the transmission of energy from the energy-transmitting entity, wherein the at least one characteristics especially comprises a blockchain-based piece of information and/or wherein the authentication is based on an encryption key exchange, especially based on a blockchain-based key exchange mechanism, wherein especially a blockchain-based key exchange mechanism is used to charge a user of or a party associated to the machine type communication device based on the energy provided by the energy-transmitting signal.

Thereby, it is advantageously possible to comparatively easily and efficiently realize and implement the method according to the present invention.

Furthermore, the present invention relates to a base station entity for transmitting an amount of energy, within a mobile communication network, by means of a radiofrequency energy-transmitting signal in order to provide energy to be used by a machine type communication device,
wherein the base station entity is part of the mobile communication network or of its access network,
wherein the base station entity is provided to act as an energy-transmitting entity transmitting the radiofrequency energy-transmitting signal,
wherein, in order for the base station entity as the energy-transmitting entity to transmit the amount of energy to the machine type communication device by means of or using the radiofrequency energy-transmitting signal, the base station entity is configured such that:
   -- the base station entity, as energy-transmitting entity, transmits an announcement signal, wherein the announcement signal is received by the machine type communication device and wherein the announcement signal indicates that transmission of energy to the machine type communication device is available,
   -- the base station entity, as energy-transmitting entity, transmits the radiofrequency energy-transmitting signal, wherein the amount of energy is thereby received by the machine type communication device.

Furthermore, the present invention relates to a user equipment for transmitting an amount of energy, within a mobile communication network, by means of a radiofrequency energy-transmitting signal in order to provide energy to be used by a machine type communication device,
wherein the user equipment is connected or able to be connected to the mobile communication network,
wherein the user equipment is provided to act as an energy-transmitting entity transmitting the radiofrequency energy-transmitting signal,
wherein, in order for the user equipment as the energy-transmitting entity to transmit the amount of energy to the machine type communication device by means of or using the radiofrequency energy-transmitting signal, the user equipment is configured such that:
   -- the user equipment, as energy-transmitting entity, transmits an announcement signal, wherein the announcement signal is received by the machine type communication device and wherein the announcement signal indicates that transmission of energy to the machine type communication device is available,
   -- the user equipment, as energy-transmitting entity, transmits the radiofrequency energy-transmitting signal, wherein the amount of energy is thereby received by the machine type communication device.

Furthermore, the present invention relates to a machine type communication device for receiving an amount of energy, within a mobile communication network, transmitted by means of a radiofrequency energy-transmitting signal in order to provide energy to be used by the machine type communication device, wherein a base station entity and/or a user equipment of the mobile communication network acts as an energy-transmitting entity, wherein the machine type communication device receives the energy-transmitting signal from the energy-transmitting entity, wherein, in order for the machine type communication device to receive the amount of energy by means of or using the radiofrequency energy-transmitting signal, the machine type communication device is configured such that:
-- the machine type communication device receives an announcement signal from the energy-transmitting entity, wherein the announcement signal indicates that transmission of energy to the machine type communication device is available,
-- the machine type communication device receives the radiofrequency energy-transmitting signal, and thereby the amount of energy, from the energy-transmitting entity.

Furthermore, the present invention relates to a system or mobile communication network for transmitting an amount of energy, within the mobile communication network, by means of a radiofrequency energy-transmitting signal in order to provide energy to be used by a machine type communication device, wherein the mobile communication network comprises or is associated to an access network, the access network comprising at least one base station entity, wherein at least one user equipment is connected or able to be connected to the mobile communication network, wherein the base station entity and/or the user equipment is provided to act as an energy-transmitting entity, wherein the energy-transmitting entity transmits the radiofrequency energy-transmitting signal, wherein, in order for the machine type communication device to receive the amount of energy by means of or using the radiofrequency energy-transmitting signal, the system or mobile communication network is configured such that:
-- the energy-transmitting entity transmits an announcement signal, wherein the announcement signal is received by the machine type communication device and wherein the announcement signal indicates that transmission of energy to the machine type communication device is available,
-- the energy-transmitting entity transmits the radiofrequency energy-transmitting signal, wherein the amount of energy is thereby received by the machine type communication device.

Additionally, the present invention relates to a program comprising a computer readable program code which, when executed on a computer and/or on a base station entity and/or on a user equipment and/or on a machine type communication device and/or on a network node of a mobile communication network, or in part on a base station entity and/or in part on a user equipment and/or in part on a machine type communication device and/or in part on a network node of a mobile communication network, causes the computer and/or the base station entity and/or the user equipment and/or the machine type communication device and/or the network node of the mobile communication network to perform the inventive method.

Still additionally, the present invention relates to a computer-readable medium comprising instructions which when executed on a computer and/or on a base station entity and/or on a user equipment and/or on a machine type communication device and/or on a network node of a mobile communication network, or in part on a base station entity and/or in part on a user equipment and/or in part on a machine type communication device and/or in part on a network node of a mobile communication network, causes the computer and/or the base station entity and/or the user equipment and/or the machine type communication device and/or the network node of the mobile communication network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

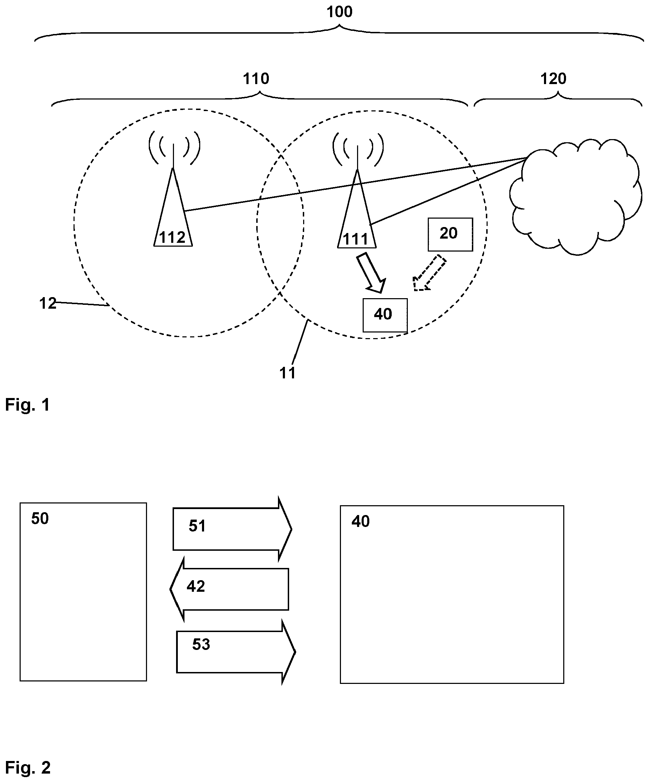

Figure 1 schematically illustrates the situation of a machine type communication device in a mobile communication network, the machine type communication device potentially being able to receive energy, by means of a radiofrequency energy-transmitting signal, from a base station entity and/or from a user equipment of the mobile communication network, the base station entity and/or the user equipment acting as an energy-transmitting entity.
Figure 2 schematically illustrates the signaling in order to allow for the transmission of energy from the energy-transmitting entity to the machine type communication device.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, an machine type communication device 40 is schematically shown in a mobile communication network 100. In the example, the mobile communication network 100 comprises an access network 110 and a core network 120. The mobile communication network 100 is preferably a cellular telecommunications network comprising typically a plurality of network cells (or radio cells). According to the present invention, the mobile communication network 100 comprises or uses or is associated or assigned to a radio access network 110, and the radio access network 110 (of the mobile communication network 100) comprises at least one base station entity, but typically a plurality of base station entities. Figure 1 schematically and exemplarily shows a first base station entity 111 and a second base station entity 112. In addition, Figure 1 shows a user equipment 20 as part of the mobile communication network 100, being able to communicate with the base station entity 111 and being located in the vicinity of the machine type communication device 40.

According to the present invention and in the exemplary situation shown in Figure 1, the first base station entity 111 is able to transmit an amount of energy to the machine type communication device 40 by means of transmitting a radiofrequency energy-transmitting signal. This is schematically indicated, in Figure 1, by means of an arrow from the first base station entity 111 towards the machine type communication device 40.
Additionally according to the present invention and in the exemplary situation shown in Figure 1, the user equipment 20 is likewise able to transmit an amount of energy to the machine type communication device 40 by means of transmitting a radiofrequency energy-transmitting signal. This is schematically indicated, in Figure 1, by means of an arrow (drawn by means of a dashed line) from the user equipment 20 towards the machine type communication device 40.
According to different embodiments of the present invention, either only the base station entity 111 (or the plurality of base station entities 111, 112 (or at least part thereof) of the mobile communication network 100) is/are able to act as an energy-transmitting entity (for transmitting, by means of the energy-transmitting signal, radiofrequency energy to the machine type communication device 40). According to an alternative embodiment, only the user equipment 20 (or the plurality of user equipments (or at least part thereof) of the mobile communication network 100) is/are able to act as an energy-transmitting entity (for transmitting, by means of the energy-transmitting signal, radiofrequency energy to the machine type communication device 40). According to still a further alternative embodiment, both the base station entity 111 (or the plurality of base station entities 111, 112 (or at least part thereof) of the mobile communication network 100) and the user equipment 20 (or the plurality of user equipments (or at least part thereof) of the mobile communication network 100) are able to act as an energy-transmitting entity (for transmitting, by means of the energy-transmitting signal, radiofrequency energy to the machine type communication device 40).
In the following, the energy-transmitting entity is also designated by means of reference sign 50, cf. Figure 2.

In Figure 2, the signaling in order to allow for the transmission of energy from the energy-transmitting entity to the machine type communication device is schematically shown. The energy-transmitting entity is schematically shown on the left hand side designated by means of reference sign 50, the energy-transmitting entity corresponding either to a base station entity 111, 112 of the mobile communication network 100, or to a user equipment 20 of or connected to the mobile communication network 100.

Eventually, the machine type communication device 40 receives energy, or an amount of energy, by means of the energy-transmitting entity 50 transmitting the radiofrequency energy-transmitting signal 53 (in the second step according to the inventive method), and the machine type communication device 40 using this energy-transmitting signal 53 to harvest at least part of its additional energy.

Previously to the transmission of the energy-transmitting signal 53, the energy-transmitting entity 50 transmits an announcement signal 51 (in the first step according to the inventive method). The announcement signal 51 is received by the machine type communication device 40 and the announcement signal 51 indicates that transmission of energy to the machine type communication device 40 - via the (subsequent) energy-transmitting signal 53 - is available.

According to a variant of the present invention, thereafter (i.e. after the transmission, by the energy-transmitting entity 50, of the announcement signal 51 and the reception thereof by the machine type communication device 40), the transfer or the transmission of energy is able to be performed or realized (and the amount of energy received by the machine type communication device 40) by means of the radiofrequency energy-transmitting signal 53. According to this (first) variant, especially the time definition and/or the frequency definition of the energy-transmitting signal 53 is defined or indicated by the announcement signal 51, and, subsequently, the energy-transmitting signal 53 is transmitted in accordance with the content of the announcement signal 51; especially the announcement signal 51 comprises an indication that the energy-transmitting signal 53 is transmitted in any case, and especially the energy-transmitting signal 53 is transmitted - as announced and/or defined by the announcement signal 51 - repeatedly, especially at least one once during a predetermined time interval.

According to a further variant of the present invention, again previously to the transmission of the energy-transmitting signal 53 (of the second step according to the inventive method), the energy-transmitting entity 50 transmits (and the machine type communication device 40 receives) the announcement signal 51. However, according to this further variant of the present invention, the machine type communication device 40 transmits, in a third step subsequent to the first step and prior to the second step, a request signal 42 towards the energy-transmitting entity 50. According to this alternative of the present invention, the announcement signal 51 announces only the possibility of the radiofrequency energy-transmitting signal 53 being transmitted, by the energy-transmitting entity 50, in response to the request signal 42. Especially according to this alternative of the present invention, the time definition and/or the frequency definition and/or the transmission power and/or the waveform of the possible energy-transmitting signal 53 is defined or indicated by the announcement signal 51 and the content of the request signal 42 essentially only triggers the energy-transmitting signal 53; alternatively, the time definition and/or the frequency definition and/or the transmission power and/or the waveform of the energy-transmitting signal 53 is at least partly defined or indicated by the request signal 42.

According to further preferred embodiments of the present invention, the announcement signal 51 is transmitted - especially in case that the energy-transmitting entity 50 corresponds to the base station entity 111 - on a system information broadcast channel, especially the broadcast control channel and especially using system information block signaling,
wherein especially the announcement signal indicates at least one characteristics of the request signal 42, especially at least one out of the following:
   -- a specific random access channel partition,
   -- a specific random access channel time slot,
   -- a specific random access channel preamble,
   -- a higher layer uplink control channel message, especially a radio resource control message. Alternatively and especially in case that the energy-transmitting entity 50 corresponds to the user equipment 20, the announcement signal 51 is transmitted on a sidelink broadcast channel, especially the sidelink broadcast control channel,
wherein especially the announcement signal indicates at least one characteristics of the request signal 42, especially at least one out of the following:
   -- a specific random access channel partition,
   -- a specific random access channel time slot,
   -- a specific random access channel preamble,
   -- a higher layer uplink control channel message, especially a radio resource control message.

Hence, according to the present invention, it is proposed that for example a gNB (or in the wider sense any network node, such as a user equipment, which is part of a cellular system, such as LTE or NR or any other) announces the provision of (additional) radiofrequency energy for ambient powered communication device, e.g. by means of:
-- signaling on a system information broadcast channel, such as the BCH, using system information block, SIB, signaling, that an ambient machine type communication device or internet-of-things device can request radiofrequency energy transmission for harvesting from this network device;
-- signaling the configuration of uplink message (i.e. the request signal 42) to request that the network node provides radiofrequency energy for harvesting:
-- by means of a specific RACH partition,
-- by means of a specific RACH time slot,
-- by means of a specific RACH preamble,
-- by means of a higher layer uplink control channel message (such as a RRC message).

The request signal 42 is preferably received, by the energy-transmitting entity 50, on a common control channel, and especially as indicated by the announcement signal 51. Especially, the approximate position and/or distance of the machine type communication device 40, especially relative to the energy-transmitting entity 50, is derived, by the energy-transmitting entity 50, from the request signal 42, and especially the energy transmission realized by the energy-transmitting signal 53 is concentrated or focused towards or in the direction of the machine type communication device 40 thus derived.

The energy-transmitting signal 53 is or corresponds preferably to a dedicated radiofrequency pulse beam, and the energy transmission realized by the energy-transmitting signal 53 is preferably adapted (by the energy-transmitting entity 50), especially regarding its transmission power, to the distance of the machine type communication device 40 from the energy-transmitting entity 50, this distance especially being derived from the request signal 42, especially its reception power at the energy-transmitting device 50.

It is furthermore preferred according to the present invention that the request signal 42 comprises at least one characteristics being able to be used to authenticate the machine type communication device 40 to request the transmission of energy from the energy-transmitting entity 50. The at least one characteristics especially comprises a blockchain-based piece of information and/or the authentication is based on an encryption key exchange, especially based on a blockchain-based key exchange mechanism; especially a blockchain-based key exchange mechanism is used to charge a user of or a party associated to the machine type communication device 40 based on the energy provided by the energy-transmitting signal 53.

## Claims

1. Method for transmitting an amount of energy, within a mobile communication network (100), by means of a radiofrequency energy-transmitting signal (53) in order to provide energy to be used by a machine type communication device (40),
wherein the mobile communication network (100) comprises or is associated to an access network (110), the access network (110) comprising at least one base station entity (111),
wherein at least one user equipment (20) is connected or able to be connected to the mobile communication network (100),
wherein the base station entity (111) and/or the user equipment (20) is provided to act as an energy-transmitting entity (50), wherein the energy-transmitting entity (50) transmits the radiofrequency energy-transmitting signal (53),
wherein, in order for the machine type communication device (40) to receive the amount of energy by means of or using the radiofrequency energy-transmitting signal (53), the method comprises the following steps:
-- in a first step, the energy-transmitting entity (50) transmits an announcement signal (51), wherein the announcement signal (51) is received by the machine type communication device (40) and wherein the announcement signal (51) indicates that transmission of energy to the machine type communication device (40) is available,
-- in a second step, the energy-transmitting entity (50) transmits the radiofrequency energy-transmitting signal (53), wherein the amount of energy is thereby received by the machine type communication device (40).

2. Method according to claim 1, wherein the time definition and/or the frequency definition of the energy-transmitting signal (53) is defined or indicated by the announcement signal (51), and wherein the energy-transmitting signal (53) is transmitted in accordance with the content of the announcement signal (51), wherein especially the announcement signal (51) comprises an indication that the energy-transmitting signal (53) is transmitted in any case,
wherein especially the energy-transmitting signal (53) is transmitted - as announced and/or defined by the announcement signal (51) - repeatedly, especially at least one once during a predetermined time interval.

3. Method according to claim 1, wherein, in a third step subsequent to the first step and prior to the second step, the machine type communication device (40) transmits a request signal (42) towards the energy-transmitting entity (50), wherein the announcement signal (51) announces only the possibility of the radiofrequency energy-transmitting signal (53) being transmitted, by the energy-transmitting entity (50), in response to the request signal (42), wherein especially
-- the time definition and/or the frequency definition and/or the transmission power and/or the waveform of the possible energy-transmitting signal (53) is defined or indicated by the announcement signal (51) and the content of the request signal (42) essentially only triggers the energy-transmitting signal (53), or
-- the time definition and/or the frequency definition and/or the transmission power and/or the waveform of the energy-transmitting signal (53) is at least partly defined or indicated by the request signal (42).

4. Method according to one of the preceding claims, wherein - especially in case that the energy-transmitting entity (50) corresponds to the base station entity (111) - the announcement signal (51) is transmitted on a system information broadcast channel, especially the broadcast control channel and especially using system information block signaling,
wherein especially the announcement signal indicates at least one characteristics of the request signal (42), especially at least one out of the following:
-- a specific random access channel partition,
-- a specific random access channel time slot,
-- a specific random access channel preamble,
-- a higher layer uplink control channel message, especially a radio resource control message.

5. Method according to one of the preceding claims, wherein - especially in case that the energy-transmitting entity (50) corresponds to the user equipment (20)
- the announcement signal (51) is transmitted on a sidelink broadcast channel, especially the sidelink broadcast control channel,
wherein especially the announcement signal indicates at least one characteristics of the request signal (42), especially at least one out of the following:
-- a specific random access channel partition,
-- a specific random access channel time slot,
-- a specific random access channel preamble,
-- a higher layer uplink control channel message, especially a radio resource control message.

6. Method according to one of the preceding claims, wherein the request signal (42) is received by the energy-transmitting entity (50), especially on a common control channel, and especially as indicated by the announcement signal (51), wherein especially the approximate position and/or distance of the machine type communication device (40), especially relative to the energy-transmitting entity (50), is derived from the request signal (42),
wherein especially the energy transmission realized by the energy-transmitting signal (53) is concentrated or focused towards or in the direction of the machine type communication device (40), wherein the energy-transmitting signal (53) especially is or corresponds to a dedicated radiofrequency pulse beam,
wherein especially the energy transmission realized by the energy-transmitting signal (53) is adapted, especially regarding its transmission power, to the distance of the machine type communication device (40) from the energy-transmitting entity (50), this distance especially being derived from the request signal (42), especially its reception power at the energy-transmitting device (50).

7. Method according to one of the preceding claims, wherein the request signal (42) comprises at least one characteristics being able to be used to authenticate the machine type communication device (40) to request the transmission of energy from the energy-transmitting entity (50), wherein the at least one characteristics especially comprises a blockchain-based piece of information and/or wherein the authentication is based on an encryption key exchange, especially based on a blockchain-based key exchange mechanism, wherein especially a blockchain-based key exchange mechanism is used to charge a user of or a party associated to the machine type communication device (40) based on the energy provided by the energy-transmitting signal (53).

8. Base station entity (111) for transmitting an amount of energy, within a mobile communication network (100), by means of a radiofrequency energy-transmitting signal (53) in order to provide energy to be used by a machine type communication device (40),
wherein the base station entity (111) is part of the mobile communication network (100) or of its access network (110),
wherein the base station entity (111) is provided to act as an energy-transmitting entity (50) transmitting the radiofrequency energy-transmitting signal (53),
wherein, in order for the base station entity (111) as the energy-transmitting entity (50) to transmit the amount of energy to the machine type communication device (40) by means of or using the radiofrequency energy-transmitting signal (53), the base station entity (111) is configured such that:
-- the base station entity (111), as energy-transmitting entity (50), transmits an announcement signal (51), wherein the announcement signal (51) is received by the machine type communication device (40) and wherein the announcement signal (51) indicates that transmission of energy to the machine type communication device (40) is available,
-- the base station entity (111), as energy-transmitting entity (50), transmits the radiofrequency energy-transmitting signal (53), wherein the amount of energy is thereby received by the machine type communication device (40).

9. User equipment (20) for transmitting an amount of energy, within a mobile communication network (100), by means of a radiofrequency energy-transmitting signal (53) in order to provide energy to be used by a machine type communication device (40),
wherein the user equipment (20) is connected or able to be connected to the mobile communication network (100),
wherein the user equipment (20) is provided to act as an energy-transmitting entity (50) transmitting the radiofrequency energy-transmitting signal (53), wherein, in order for the user equipment (20) as the energy-transmitting entity (50) to transmit the amount of energy to the machine type communication device (40) by means of or using the radiofrequency energy-transmitting signal (53), the user equipment (20) is configured such that:
-- the user equipment (20), as energy-transmitting entity (50), transmits an announcement signal (51), wherein the announcement signal (51) is received by the machine type communication device (40) and wherein the announcement signal (51) indicates that transmission of energy to the machine type communication device (40) is available,
-- the user equipment (20), as energy-transmitting entity (50), transmits the radiofrequency energy-transmitting signal (53), wherein the amount of energy is thereby received by the machine type communication device (40).

10. Machine type communication device (40) for receiving an amount of energy, within a mobile communication network (100), transmitted by means of a radiofrequency energy-transmitting signal (53) in order to provide energy to be used by the machine type communication device (40),
wherein a base station entity (111) and/or a user equipment (20) of the mobile communication network (100) acts as an energy-transmitting entity (50),
wherein the machine type communication device (40) receives the energy-transmitting signal (53) from the energy-transmitting entity (50),
wherein, in order for the machine type communication device (40) to receive the amount of energy by means of or using the radiofrequency energy-transmitting signal (53), the machine type communication device is configured such that:
-- the machine type communication device (40) receives an announcement signal (51) from the energy-transmitting entity (50), wherein the announcement signal (51) indicates that transmission of energy to the machine type communication device (40) is available,
-- the machine type communication device (40) receives the radiofrequency energy-transmitting signal (53), and thereby the amount of energy, from the energy-transmitting entity (50).

11. System or mobile communication network (100) for transmitting an amount of energy, within the mobile communication network (100), by means of a radiofrequency energy-transmitting signal (53) in order to provide energy to be used by a machine type communication device (40),
wherein the mobile communication network (100) comprises or is associated to an access network (110), the access network (110) comprising at least one base station entity (111),
wherein at least one user equipment (20) is connected or able to be connected to the mobile communication network (100),
wherein the base station entity (111) and/or the user equipment (20) is provided to act as an energy-transmitting entity (50), wherein the energy-transmitting entity (50) transmits the radiofrequency energy-transmitting signal (53),
wherein, in order for the machine type communication device (40) to receive the amount of energy by means of or using the radiofrequency energy-transmitting signal (53), the system or mobile communication network (100) is configured such that:
-- the energy-transmitting entity (50) transmits an announcement signal (51), wherein the announcement signal (51) is received by the machine type communication device (40) and wherein the announcement signal (51) indicates that transmission of energy to the machine type communication device (40) is available,
-- the energy-transmitting entity (50) transmits the radiofrequency energy-transmitting signal (53), wherein the amount of energy is thereby received by the machine type communication device (40).

12. Program comprising a computer readable program code, which, when executed on a computer and/or on a base station entity (111) and/or on a user equipment (20) and/or on a machine type communication device (40) and/or on a network node of a mobile communication network (100), or in part on a base station entity (111) and/or in part on a user equipment (20) and/or in part on a machine type communication device (40) and/or in part on a network node of a mobile communication network (100), causes the computer and/or the base station entity (111) and/or the user equipment (20) and/or the machine type communication device (40) and/or the network node of the mobile communication network (100) to perform a method according one of claims 1 to 7.

13. Computer-readable medium comprising instructions which when executed on a computer and/or on a base station entity (111) and/or on a user equipment (20) and/or on a machine type communication device (40) and/or on a network node of a mobile communication network (100), or in part on a base station entity (111) and/or in part on a user equipment (20) and/or in part on a machine type communication device (40) and/or in part on a network node of a mobile communication network (100), causes the computer and/or the base station entity (111) and/or the user equipment (20) and/or the machine type communication device (40) and/or the network node of the mobile communication network (100) to perform a method according one of claims 1 to 7

## Amended claims

### Amended claims in accordance with Rule 137(2) EPC.

1. Method for transmitting an amount of energy, within a mobile communication network (100), by means of a radiofrequency energy-transmitting signal (53) in order to provide energy to be used by a machine type communication device (40),
wherein the mobile communication network (100) comprises or is associated to an access network (110), the access network (110) comprising at least one base station entity (111),
wherein at least one user equipment (20) is connected or able to be connected to the mobile communication network (100),
wherein the base station entity (111) and/or the user equipment (20) is provided to act as an energy-transmitting entity (50), wherein the energy-transmitting entity (50) transmits the radiofrequency energy-transmitting signal (53),
**characterized in that**, in order for the machine type communication device (40) to receive the amount of energy by means of or using the radiofrequency energy-transmitting signal (53), the method comprises the following steps:
-- in a first step, the energy-transmitting entity (50) transmits an announcement signal (51), wherein the announcement signal (51) is received by the machine type communication device (40) and wherein the announcement signal (51) indicates that transmission of energy to the machine type communication device (40) is available,
-- in a second step, the energy-transmitting entity (50) transmits the radiofrequency energy-transmitting signal (53), wherein the amount of energy is thereby received by the machine type communication device (40), wherein the energy transmission realized by the energy-transmitting signal (53) is concentrated or focused towards or in the direction of the machine type communication device (40), wherein the energy-transmitting signal (53) is or corresponds to a dedicated radiofrequency pulse beam,
-- in a third step subsequent to the first step and prior to the second step, the machine type communication device (40) transmits a request signal (42) to the energy-transmitting entity (50), wherein the announcement signal (51) announces only the possibility of the radiofrequency energy-transmitting signal (53) being transmitted, by the energy-transmitting entity (50), in response to the request signal (42).

2. Method according to claim 1, wherein
-- a time definition and/or a frequency definition and/or the transmission power and/or the waveform of the possible energy-transmitting signal (53) is defined or indicated by the announcement signal (51) and the content of the request signal (42) essentially only triggers the energy-transmitting signal (53), or
-- a time definition and/or a frequency definition and/or the transmission power and/or the waveform of the energy-transmitting signal (53) is at least partly defined or indicated by the request signal (42).

3. Method according to one of the preceding claims, wherein the energy-transmitting entity (50) corresponds to the base station entity (111) and the announcement signal (51) is transmitted on a system information broadcast channel,
wherein the announcement signal indicates at least one out of the following:
-- a specific random access channel partition,
-- a specific random access channel time slot,
-- a specific random access channel preamble,
-- a higher layer uplink control channel message, especially a radio resource control message.

4. Method according to one of the preceding claims, wherein the energy-transmitting entity (50) corresponds to the user equipment (20) and the announcement signal (51) is transmitted on a sidelink broadcast channel, wherein the announcement signal indicates at least one out of the following:
-- a specific random access channel partition,
-- a specific random access channel time slot,
-- a specific random access channel preamble,
-- a higher layer uplink control channel message, especially a radio resource control message.

5. Method according to one of the preceding claims, wherein the approximate position and/or distance of the machine type communication device (40) relative to the energy-transmitting entity (50) is derived from the request signal (42), wherein the energy transmission realized by the energy-transmitting signal (53) is adapted, especially regarding its transmission power, to the distance of the machine type communication device (40) from the energy-transmitting entity (50).

6. Method according to one of the preceding claims, wherein the request signal (42) comprises at least one characteristic being able to be used to authenticate the machine type communication device (40) to request the transmission of energy from the energy-transmitting entity (50).

7. Method according to claim 6, wherein the at least one characteristic comprises a blockchain-based piece of information and wherein the authentication is based on a blockchain-based key exchange mechanism, wherein especially a blockchain-based key exchange mechanism is used to charge a user of or a party associated to the machine type communication device (40) based on the energy provided by the energy-transmitting signal (53).

8. Base station entity (111) for transmitting an amount of energy, within a mobile communication network (100), by means of a radiofrequency energy-transmitting signal (53) in order to provide energy to be used by a machine type communication device (40),
wherein the base station entity (111) is part of the mobile communication network (100) or of its access network (110),
wherein the base station entity (111) is provided to act as an energy-transmitting entity (50) transmitting the radiofrequency energy-transmitting signal (53),
**characterized in that**, in order for the base station entity (111) as the energy-transmitting entity (50) to transmit the amount of energy to the machine type communication device (40) by means of or using the radiofrequency energy-transmitting signal (53), the base station entity (111) is configured as follows:
-- the base station entity (111) is configured to transmit an announcement signal (51) to the machine type communication device (40), wherein the announcement signal (51) indicates that transmission of energy to the machine type communication device (40) is available,
-- the base station entity (111) is configured to receive a request signal (42) from the machine type communication device (40), wherein the announcement signal (51) announces only the possibility of the radiofrequency energy-transmitting signal (53) being transmitted, by the base station entity (111), in response to the request signal (42),
-- the base station entity (111) is configured to transmit the radiofrequency energy-transmitting signal (53) such that the amount of energy is received by the machine type communication device (40), wherein the base station entity (111) is configured to concentrate or focus the energy transmission realized by the energy-transmitting signal (53) towards or in the direction of the machine type communication device (40), wherein the energy-transmitting signal (53) is or corresponds to a dedicated radiofrequency pulse beam.

9. User equipment (20) for transmitting an amount of energy, within a mobile communication network (100), by means of a radiofrequency energy-transmitting signal (53) in order to provide energy to be used by a machine type communication device (40),
wherein the user equipment (20) is connected or able to be connected to the mobile communication network (100),
wherein the user equipment (20) is provided to act as an energy-transmitting entity (50) transmitting the radiofrequency energy-transmitting signal (53), **characterized in that**, in order for the user equipment (20) as the energy-transmitting entity (50) to transmit the amount of energy to the machine type communication device (40) by means of or using the radiofrequency energy-transmitting signal (53), the user equipment (20) is configured as follows:
-- the user equipment (20) is configured to transmit an announcement signal (51) to the machine type communication device (40), wherein the announcement signal (51) indicates that transmission of energy to the machine type communication device (40) is available,
-- the user equipment (20) is configured to receive a request signal (42) from the machine type communication device (40), wherein the announcement signal (51) announces only the possibility of the radiofrequency energy-transmitting signal (53) being transmitted, by the user equipment (20), in response to the request signal (42),
-- the user equipment (20) is configured to transmit the radiofrequency energy-transmitting signal (53) such that the amount of energy is received by the machine type communication device (40), wherein the user equipment (20) is configured to concentrate or focus the energy transmission realized by the energy-transmitting signal (53) towards or in the direction of the machine type communication device (40), wherein the energy-transmitting signal (53) is or corresponds to a dedicated radiofrequency pulse beam.

10. Machine type communication device (40) for receiving an amount of energy, within a mobile communication network (100), transmitted by means of a radiofrequency energy-transmitting signal (53) in order to provide energy to be used by the machine type communication device (40),
wherein a base station entity (111) and/or a user equipment (20) of the mobile communication network (100) acts as an energy-transmitting entity (50), wherein the machine type communication device (40) receives the energy-transmitting signal (53) from the energy-transmitting entity (50), **characterized in that**, in order for the machine type communication device (40) to receive the amount of energy by means of or using the radiofrequency energy-transmitting signal (53), the machine type communication device is configured as follows:
-- the machine type communication device (40) is configured to receive an announcement signal (51) from the energy-transmitting entity (50), wherein the announcement signal (51) indicates that transmission of energy to the machine type communication device (40) is available,
-- the machine type communication device (40) is configured to transmit a request signal (42) to the energy-transmitting entity (50), wherein the announcement signal (51) announces only the possibility of the radiofrequency energy-transmitting signal (53) being transmitted, by the energy-transmitting entity (50), in response to the request signal (42),
-- the machine type communication device (40) is configured to receive the radiofrequency energy-transmitting signal (53), and thereby the amount of energy, from the energy-transmitting entity (50), wherein the energy transmission realized by the energy-transmitting signal (53) is concentrated or focused towards or in the direction of the machine type communication device (40), wherein the energy-transmitting signal (53) is or corresponds to a dedicated radiofrequency pulse beam.

11. System or mobile communication network (100) for transmitting an amount of energy, within the mobile communication network (100), by means of a radiofrequency energy-transmitting signal (53) in order to provide energy to be used by a machine type communication device (40),
wherein the mobile communication network (100) comprises or is associated to an access network (110), the access network (110) comprising at least one base station entity (111),
wherein at least one user equipment (20) is connected or able to be connected to the mobile communication network (100),
wherein the base station entity (111) and/or the user equipment (20) is provided to act as an energy-transmitting entity (50), wherein the energy-transmitting entity (50) transmits the radiofrequency energy-transmitting signal (53),
**characterized in that**, in order for the machine type communication device (40) to receive the amount of energy by means of or using the radiofrequency energy-transmitting signal (53), the system or mobile communication network (100) is configured such that:
-- the energy-transmitting entity (50) is configured to transmit an announcement signal (51) to the machine type communication device (40), wherein the announcement signal (51) indicates that transmission of energy to the machine type communication device (40) is available,
-- the energy-transmitting entity (50) is configured to receive a request signal (42) from the machine type communication device (40), wherein the announcement signal (51) announces only the possibility of the radiofrequency energy-transmitting signal (53) being transmitted, by the energy-transmitting entity (50), in response to the request signal (42),
-- the energy-transmitting entity (50) is configured to transmit the radiofrequency energy-transmitting signal (53), wherein the amount of energy is thereby received by the machine type communication device (40), wherein the energy-transmitting entity (50) is configured to concentrate or focus the energy transmission realized by the energy-transmitting signal (53) towards or in the direction of the machine type communication device (40), wherein the energy-transmitting signal (53) is or corresponds to a dedicated radiofrequency pulse beam.

12. Program comprising a computer readable program code, which, when executed on a computer and/or on a base station entity (111) and/or on a user equipment (20) and/or on a machine type communication device (40) and/or on a network node of a mobile communication network (100), or in part on a base station entity (111) and/or in part on a user equipment (20) and/or in part on a machine type communication device (40) and/or in part on a network node of a mobile communication network (100), causes the computer and/or the base station entity (111) and/or the user equipment (20) and/or the machine type communication device (40) and/or the network node of the mobile communication network (100) to perform a method according one of claims 1 to 7.

13. Computer-readable medium comprising instructions which when executed on a computer and/or on a base station entity (111) and/or on a user equipment (20) and/or on a machine type communication device (40) and/or on a network node of a mobile communication network (100), or in part on a base station entity (111) and/or in part on a user equipment (20) and/or in part on a machine type communication device (40) and/or in part on a network node of a mobile communication network (100), causes the computer and/or the base station entity (111) and/or the user equipment (20) and/or the machine type communication device (40) and/or the network node of the mobile communication network (100) to perform a method according one of claims 1 to 7
